# EUROPEAN PATENT APPLICATION

(11) **EP 4 213 030 A1**
(43) Date of publication of application: **19.07.2023**
(21) Application number: 21881884.7
(22) Date of filing: 11.10.2021
(51) Int. Cl.: G06F 13/40

(54) **METHOD AND DEVICE FOR DATA PROCESSING**

(30) Priority: 19.10.2020 CN 202011121429; 30.12.2020 CN 202011620686
(71) Applicant: Huawei Technologies Co., Ltd., Shenzhen, Guangdong 518129 (CN)
(72) Inventor: ZHAO, Chentao, Shenzhen, Guangdong 518129 (CN); YANG, Xin, Shenzhen, Guangdong 518129 (CN); ZHENG, Zhenfa, Shenzhen, Guangdong 518129 (CN)
(74) Representative: Goddar, Heinz J.
(86) International application number: PCT/CN2021/123049
(87) International publication number: WO 2022/083466

(57) **Abstract**

For a problem that a rate of data transmission between a host and a PCIe device is currently restricted by a version and a quantity of channels of a PCIe controller, to meet a service requirement, this application provides a data processing method, apparatus, and system. In this application, the host is connected to different interfaces of the PCIe device through different PCIe links, and transmits data in parallel through the different PCIe links, to increase a rate at which the data is transmitted through the PCIe links.

## Description

### TECHNICAL FIELD

This application relates to the computing field, and in particular, to a data processing method and apparatus.

### BACKGROUND

A bus (bus) is a standardized data exchange manner between computer components, that is, providing data transmission and control logic for each component in a universal manner. The bus usually transmits bits (bits) between different components according to preset lines. All these lines can be responsible for transmitting only one bit at a time. Therefore, a plurality of lines need to be used at the same time to transmit more data. A size of data that can be transmitted by the bus at the same time is referred to as a width (width), in a unit of a bit. A larger bus width indicates better transmission performance. Bandwidth (namely, a size of total data that can be transmitted in a unit time) of the bus may be obtained through calculation by multiplying a frequency by the width.

Peripheral component interconnect express (Peripheral Component Interconnect Express, PCIe) is a type of computer bus, which constructs a standard for a higher-speed serial communication system based on a programming concept and a signal standard of peripheral component interconnect (Peripheral Component Interconnect, PCI). PCIe buses of different versions and with different quantities of channels can support different maximum bandwidth. Usually, a higher version corresponding to a PCIe controller chip indicates a larger quantity of corre sponding channels, higher maximum bandwidth that can be supported, and a larger amount of data that can be transmitted in real time. For example, in a common version v3.x, a single-channel rate is 985 MB/s, and a 16-channel rate is 15.75 GB/s; and in a currently latest version v5.x, a single-channel rate is 3.938 GB/s, and a 16-channel rate is 63.01 GB/s.

In an actual system design solution, a version of a PCIe controller is restricted by a plurality of physical factors and economic factors, and a quantity of PCIe channels is also affected by factors such as module selection, computing unit density, and hardware cabling in a computer, especially when the computer currently becomes lighter and thinner. Therefore, when a PCIe version and a quantity of channels remain unchanged, how to effectively and innovatively expand bandwidth in a transmission model and a link connection manner, so that a system solution is

### SUMMARY

For a problem that a rate of data transmission between a host and a PCIe device is currently restricted by a version and a quantity of channels of a PCIe controller, to meet a service requirement, this application provides a data processing method, apparatus, and system, so that a rate at which data is transmitted through a PCIe link can be increased when the version and the quantity of channels of the PCIe controller remain unchanged.

According to a first aspect, this application provides a data processing system. The data processing system includes a host and a PCIe device. The PCIe device includes a first interface and a second interface. The PCIe device establishes a first PCIe link to the host through the first interface, and establishes a second PCIe link to the host through the second interface. The host is configured to: send first data to the PCIe device through the first PCIe link, and send second data to the PCIe device through the second PCIe link. The PCIe device is configured to: receive the first data through the first PCIe link, and receive the second data through the second PCIe link. Both the first PCIe link and the second PCIe link are in an active state during data transmission.

In an existing method, although the PCIe device can have a plurality of interfaces, only one interface is connected to the host through a PCIe link in an operation. However, in the data processing system provided in this application, the host is separately connected to at least two interfaces of the PCIe device through at least two independent PCIe links, and can send data through these PCIe links. In addition, these independent PCIe links are all in the active state during data transmission, so that a rate at which the data is transmitted through the PCIe links between the host and the PCIe device is increased when a version and a quantity of channels of a PCIe controller remain unchanged.

According to the first aspect, in a possible implementation of this application, the host is further configured to: determine to-be-transmitted data that needs to be sent to the PCIe device, and split the to-be-transmitted data into the first data and the second data.

In the foregoing implementation, when executing one data transmission task, the host can actively split to-be-transmitted data corresponding to the data transmission task into a plurality of pieces of data, and separately transmit the plurality of pieces of data at the same time through a plurality of links, so that, in the method in this application, when a plurality of data transmission tasks are received, to-be-transmitted data corresponding to a part of the plurality of data transmission tasks can be transmitted through the first link, and to-be-transmitted data corresponding to another part of the plurality of data transmission tasks can be transmitted through the second link, or when one data transmission task is received, to-be-transmitted data corresponding to the data transmission task can be actively split, and transmitted through different links. In this way, this solution can be applied to more scenarios.

According to the first aspect, in another possible implementation of this application, the PCIe device is further configured to: determine to-be-transmitted data that needs to be requested from the host, split the to-be-transmitted data into the first data and the second data, and separately request the first data and the second data from the host.

In the foregoing implementation, an operation of determining the to-be-transmitted data, the first data, and the second data can be performed by the PCIe device, so that this solution can be applied to more scenarios.

According to the first aspect, in another possible implementation of this application, the to-be-transmitted data is split into the first data and the second data based on a link state of the first PCIe link and a link state of the second PCIe link.

According to the first aspect, in another possible implementation of this application, the link state of the first PCIe link and the link state of the second PCIe link include bandwidth or usage of the first PCIe link and bandwidth or usage of the second PCIe link.

In the foregoing implementation, a manner of splitting the to-be-transmitted data is determined based on link states of different links, so that to-be-transmitted data of different sizes can be allocated to the different links more appropriately. For example, more to-be-transmitted data is allocated to a link with higher bandwidth. In this way, overall efficiency of the data processing system is improved.

According to the first aspect, in another possible implementation of this application, the to-be-transmitted data may be evenly split into a plurality of pieces of data, that is, the first data and the second data obtained after splitting have a same size.

In the foregoing implementation, a data splitting manner is simple, and all attributes of the plurality of links between the host and the PCIe link are usually the same. Therefore, an even splitting manner is used. This can reduce overheads caused by data splitting, and achieve a better result in most cases.

According to the first aspect, in another possible implementation of this application, the host is further configured to: send the first data to the PCIe device through the first link in a direct memory access manner, and also send the second data to the PCIe device through the second link in direct memory access manner.

In the foregoing implementation, when direct memory access is used, data transmission can be completed without occupying a large quantity of resources of a central processing unit, so that the central processing unit can execute another task during data transmission. Therefore, this implementation can improve efficiency of the data processing system.

According to the first aspect, in another possible implementation of this application, the host is further configured to: before splitting the to-be-transmitted data into the first data and the second data, determine that a size of the to-be-transmitted data exceeds a preset value.

In the foregoing implementation, before the to-be-transmitted data is split, the to-be-transmitted data is first compared with the preset value, and a split operation is performed only when the size of the to-be-transmitted data exceeds the preset value. Because a data splitting operation causes specific overheads, only an operation of splitting and transmitting, through different links, to-be-transmitted data that exceeds a specific size is performed. This helps improve the efficiency of the data processing system.

According to the first aspect, in another possible implementation of this application, the host is further configured to: when determining that both the first data and the second data are sent to the PCIe device, send a synchronization signal to the PCIe device. The synchronization signal is used to indicate that data transmission is completed.

In the foregoing implementation, the PCIe device may not know the size of the to-be-transmitted data, and may not know a size of the first data and a size of the second data. Therefore, when determining that transmission of both the first data and the second data is completed, the host sends the synchronization signal to the PCIe device, so that the PCIe device can determine that data transmission is completed. This improves stability of the data processing system.

According to the first aspect, in another possible implementation of this application, the PCIe device is further configured to: after determining that the first data is written, adjust a pointer to an end of storage space. The storage space is space that is in the PCIe device and that stores the received first data.

In the foregoing implementation, the pointer is used to indicate a first address of a space to which data is written next time. Therefore, after the first data is written, the pointer can be adjusted to the end of the storage space used to store the first data, to indicate to continue to store, after the storage space, data that is received next time.

According to the first aspect, in another possible implementation of this application, the host is separately connected to the first interface and the second interface in the PCIe device by using a PCIe switch.

In the foregoing implementation, the PCIe switch increases a quantity of PCIe devices that can be connected to the host or interfaces in the PCIe devices. This improves expandability of the data processing system.

According to the first aspect, in another possible implementation of this application, the data processing system may be applied to a cloud phone scenario. The host is further configured to: before sending the first data to the PCIe device through the first PCIe link, receive a data processing task sent by a user. The data processing task corresponds to the to-be-transmitted data that includes the first data and the second data.

In the foregoing implementation, the data processing system is applied to the cloud phone scenario. In the cloud phone scenario, one host is usually required to support 100-odd cloud phones to run a game or a video rendering task at the same time. This requires to transmit a large amount of data between the host and a PCIe device, and has a high requirement for real-time data transmission. Therefore, a method for splitting and sending the to-be-transmitted data through the different links is used. This helps improve, in the cloud phone scenario, efficiency of processing the data processing task sent by the user, and then improves user experience.

According to the first aspect, in another possible implementation of this application, the data processing system may be applied to an artificial intelligence scenario. The host is further configured to: before sending the first data to the PCIe device through the first PCIe link, receive an artificial intelligence task. The artificial intelligence task corresponds to the to-be-transmitted data that includes the first data and the second data.

In the foregoing implementation, the data processing system is applied to the artificial intelligence scenario. The artificial intelligence task includes a training task or an inference task, and involves a large quantity of data to be transmitted between the host and the PCIe device. Therefore, a method for splitting and sending the to-be-transmitted data through the different links is used. This helps improve, in the artificial intelligence scenario, efficiency of executing the artificial intelligence task by the data processing system.

According to a second aspect, this application provides a data processing method. The data processing method is applied to a host. A PCIe device establishes a first PCIe link to the host through a first interface, and establishes a second PCIe link to the host through a second interface. The data processing method includes: sending first data to the PCIe device through the first PCIe link, and sending second data to the PCIe device through the second PCIe link, where both the first PCIe link and the second PCIe link are in an active state during data transmission.

According to the second aspect, in a possible implementation of this application, the method further includes: The host determines to-be-transmitted data that needs to be sent to the PCIe device, and splits the to-be-transmitted data into the first data and the second data.

According to the second aspect, in another possible implementation of this application, splitting the to-be-transmitted data into the first data and the second data includes: splitting the to-be-transmitted data into the first data and the second data based on a link state of the first PCIe link and a link state of the second PCIe link.

According to the second aspect, in another possible implementation of this application, the link state of the first PCIe link and the link state of the second PCIe link include bandwidth or usage of the first PCIe link and bandwidth or usage of the second PCIe link.

According to the second aspect, in another possible implementation of this application, the first data and the second data obtained through splitting have a same size.

According to the second aspect, in another possible implementation of this application, the sending first data to the PCIe device through the first PCIe link includes: sending the first data to the PCIe device through the first PCIe link by using direct memory access. The sending second data to the PCIe device through the second PCIe link includes: sending the second data to the PCIe device through the second PCIe link by using direct memory access.

According to the second aspect, in another possible implementation of this application, before the to-be-transmitted data is split into the first data and the second data, the method further includes: The host determines that a size of the to-be-transmitted data exceeds a preset value.

According to the second aspect, in another possible implementation of this application, the method further includes: After determining that both the first data and the second data are sent to the PCIe device, the host sends a synchronization signal to the PCIe device. The synchronization signal is used to indicate that data transmission is completed.

According to the second aspect, in another possible implementation of this application, the host is separately connected to the first interface and the second interface by using a PCIe switch.

According to the second aspect, in another possible implementation of this application, the method further includes: receiving a data transmission request from the PCIe device, where the data transmission request is used to indicate the host to transmit the first data through the first link and transmit the second data through the second link.

According to the second aspect, in another possible implementation of this application, the data processing method is applied to a cloud phone scenario. Before the sending first data to the PCIe device through the first PCIe link, the method further includes: receiving a data processing task sent by a user, where the data processing task corresponds to the to-be-transmitted data that includes the first data and the second data.

According to the second aspect, in another possible implementation of this application, the data processing method is applied to an artificial intelligence scenario. Before the sending first data to the PCIe device through the first PCIe link, the method further includes: receiving an artificial intelligence task, where the artificial intelligence task corresponds to the to-be-transmitted data that includes the first data and the second data.

According to a third aspect, this application provides a data processing apparatus. A PCIe device establishes a first PCIe link to the data processing apparatus through a first interface, and establishes a second PCIe link to the data processing apparatus through a second interface. The data processing apparatus include s a transmission module, configured to: send first data to the PCIe device through the first PCIe link, and send second data to the PCIe device through the second PCIe link. Both the first PCIe link and the second PCIe link are in an active state during data transmission.

According to the third aspect, in a possible implementation of this application, the data processing apparatus further includes: a determining module, configured to determine to-be-transmitted data that needs to be sent to the PCIe device; and a splitting module, configured to split the to-be-transmitted data into the first data and the second data.

According to the third aspect, in another possible implementation of this application, the splitting module is configured to split the to-be-transmitted data into the first data and the second data based on a link state of the first PCIe link and a link state of the second PCIe link.

According to the third aspect, in another possible implementation of this application, the link state of the first PCIe link and the link state of the second PCIe link include bandwidth or usage of the first PCIe link and bandwidth or usage of the second PCIe link.

According to the third aspect, in another possible implementation of this application, the first data and the second data have a same size.

According to the third aspect, in another possible implementation of this application, the transmission module is configured to: send the first data to the PCIe device through the first PCIe link by using direct memory access, and send the second data to the PCIe device through the second PCIe link by using direct memory access.

According to the third aspect, in another possible implementation of this application, the determining module is further configured to: determine that the first data and the second data are sent to the PCIe device, and send a synchronization signal to the PCIe device.

According to the third aspect, in another possible implementation of this application, the data processing apparatus is separately connected to the first interface and the second interface by using a PCIe switch.

According to the third aspect, in another possible implementation of this application, the transmission module is further configured to receive a data transmission request from the PCIe device. The data transmission request indicates the data processing apparatus to transmit the first data through the first PCIe link and transmit the second data through the second PCIe link.

According to the third aspect, in another possible implementation of this application, the data processing apparatus is applied to a cloud phone scenario. The transmission module is further configured to receive a data processing task sent by a user, and data corresponding to the data processing task includes the first data and the second data.

According to the third aspect, in another possible implementation of this application, the data processing apparatus is applied to an artificial intelligence scenario. The transmission module is further configured to receive an artificial intelligence task, and data corresponding to the artificial intelligence task includes the first data and the second data.

According to a fourth aspect, this application provides a data processing method. The data processing method is applied to a PCIe device. The PCIe device includes a first interface and a second interface. The PCIe device establishes a first PCIe link to a host through the first interface, and establishes a second PCIe link to the host through the second interface. The data processing method includes: receiving, through the first PCIe link, first data sent by the host, and receiving, through the second PCIe link, second data sent by the host, where both the first PCIe link and the second PCIe link are in an active state during data transmission.

According to the fourth aspect, in a possible implementation of this application, the method further includes: determining to-be-transmitted data that needs to be requested from the host, and separately requesting the first data and the second data from the host based on the to-be-transmitted data.

According to the fourth aspect, in another possible implementation of this application, the separately requesting the first data and the second data from the host based on the to-be-transmitted data includes: separately requesting the first data and the second data from the host based on the to-be-transmitted data, a link state of the first PCIe link, and a link state of the second PCIe link.

According to the fourth aspect, in another possible implementation of this application, the link state of the first PCIe link and the link state of the second PCIe link include bandwidth or usage of the first PCIe link and bandwidth or usage of the second PCIe link.

According to the fourth aspect, in another possible implementation of this application, the first data and the second data have a same size.

According to the fourth aspect, in another possible implementation of this application, the receiving, through the first PCIe link, first data sent by the host includes: receiving, through the first PCIe link by using direct memory access, the first data sent by the host. The receiving, through the second PCIe link, second data sent by the host includes: receiving, through the second PCIe link by using direct memory access, the second data sent by the host.

According to the fourth aspect, in another possible implementation of this application, the method further includes: before the separately requesting the first data and the second data from the host based on the to-be-transmitted data, determining that a size of the to-be-transmitted data exceeds a preset value.

According to the fourth aspect, in another possible implementation of this application, the method further includes: receiving a synchronization signal sent by the host, where the synchronization signal indicates that transmission of the first data and the second data is completed.

According to the fourth aspect, in another possible implementation of this application, the method further includes: after it is determined that the first data is written, adjusting a pointer to an end of storage space, where the storage space is space that is in the PCIe device and that stores the first data.

According to the fourth aspect, in another possible implementation of this application, the first interface and the second interface are connected to the host by using a PCIe switch.

According to the fourth aspect, in another possible implementation of this application, the data processing method is applied to a cloud phone scenario. The first data and the second data correspond to a data processing task sent by a user to the host.

According to the fourth aspect, in another possible implementation of this application, the data processing method is applied to an artificial intelligence scenario. The first data and the second data correspond to an AI task received by the host.

According to a fifth aspect, this application provides a data processing apparatus. The data processing apparatus includes a first interface and a second interface. The data processing apparatus establishes a first PCIe link to a host through the first interface, and establishes a second PCIe link to the host through the second interface. The data processing apparatus includes: a transmission module, configured to: receive, through the first PCIe link, first data sent by the host, and receive, through the second PCIe link, second data sent by the host. Both the first PCIe link and the second PCIe link are in an active state during data transmission.

According to the fifth aspect, in a possible implementation of this application, the data processing apparatus further includes: a determining module, configured to determine to-be-transmitted data that needs to be requested from the host; and a request module, configured to separately request the first data and the second data from the host based on the to-be-transmitted data.

According to the fifth aspect, in a possible implementation of this application, the request module is configured to separately request the first data and the second data from the host based on the to-be-transmitted data, a link state of the first PCIe link, and a link state of the second PCIe link.

According to the fifth aspect, in another possible implementation of this application, the link state of the first PCIe link and the link state of the second PCIe link include bandwidth or usage of the first PCIe link and bandwidth or usage of the second PCIe link.

According to the fifth aspect, in a possible implementation of this application, the first data and the second data have a same size.

According to the fifth aspect, in a possible implementation of this application, the transmission module is configured to receive, through the first PCIe link by using direct memory access, the first data sent by the host.

According to the fifth aspect, in a possible implementation of this application, the transmission module is further configured to receive a synchronization signal sent by the host. The synchronization signal indicates that transmission of the first data and the second data is completed.

According to the fifth aspect, in a possible implementation of this application, the data processing apparatus further includes an adjustment module, configured to: after it is determined that the first data is written, adjust a pointer to an end of storage space. The storage space is space that is in the PCIe device and that stores the first data.

According to the fifth aspect, in a possible implementation of this application, the first interface and the second interface are connected to the host by using a PCIe switch.

According to the fifth aspect, in a possible implementation of this application, the data processing apparatus is applied to a cloud phone scenario. The first data and the second data correspond to a data processing task sent by a user to the host.

According to the fifth aspect, in a possible implementation of this application, the data processing apparatus is applied to an artificial intelligence scenario. The first data and the second data correspond to an artificial intelligence task received by the host.

According to a sixth aspect, this application provides a computer apparatus. The computer apparatus includes a processor and a memory. The memory is configured to store program code. The processor is configured to execute the program code to implement the data processing method according to the second aspect or the fourth aspect.

According to a seventh aspect, this application provides a computer-readable storage medium. The computer-readable medium includes instructions. When the instructions are run on a computer, the computer is enabled to perform the data processing method according to the second aspect or the fourth aspect.

According to an eighth aspect, this application provides a computer program. When the computer program is run on a computer, the computer is enabled to perform the data processing method according to the second aspect or the fourth aspect.

### BRIEF DESCRIPTION OF DRAWINGS

FIG. 1 is a diagram of an architecture of a data processing system including a PCIe link;
FIG. 2 is a diagram of an architecture of a data processing system according to this application;
FIG. 3 is a schematic diagram of a procedure of a data processing embodiment according to this application;
FIG. 4 is a schematic diagram of a solution in which to-be-transmitted data is split and separately transmitted;
FIG. 5 is a schematic diagram of a mapping relationship between a memory domain and a PCIe bus domain;
FIG. 6 is a schematic diagram of a procedure of another data processing embodiment according to this application;
FIG. 7 is a schematic diagram of an architecture of another data processing system according to this application;
FIG. 8 is a schematic diagram of a procedure of another data processing embodiment according to this application;
FIG. 9 is a schematic diagram of an artificial intelligence application scenario according to this application;
FIG. 10 is a schematic diagram of a cloud phone application scenario according to this application;
FIG. 11 is a schematic diagram of a data processing apparatus according to this application;
FIG. 12 is a schematic diagram of a data processing apparatus according to this application; and
FIG. 13 is a schematic diagram of a structure of a computer apparatus according to this application.

### DESCRIPTION OF EMBODIMENTS

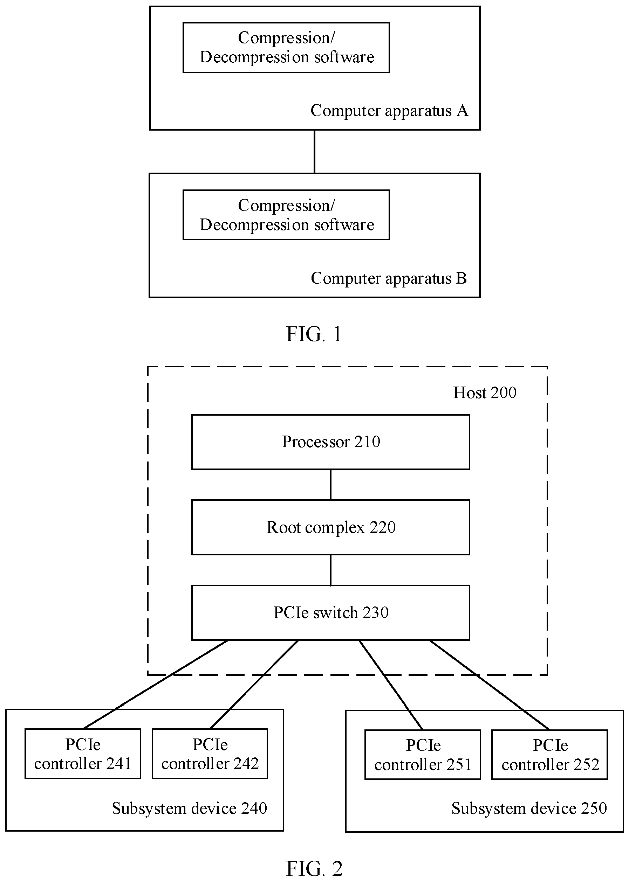

To increase a data transmission rate without changing a PCIe version and a quantity of channels, FIG. 1 is a diagram of an architecture of a data processing system that can expand bandwidth In the system, to-be-transmitted data is compressed at a transmitting end, and compressed data is transmitted through a PCIe link. When the PCIe version and the quantity of channels remain unchanged, more to-be-transmitted data is transmitted to a receiving end in a unit time. This actually increases the data transmission rate.

Specifically, as shown in FIG. 1, the data processing system includes two computer apparatuses. The two computer apparatuses are connected through a PCIe bus, and both run software that can implement a data compression function and a data decompression function. The two functions may be respectively implemented by using two pieces of software, or may be integrated into one piece of software. When a computer apparatus A in the two computer apparatuses sends data to a computer apparatus B, the to-be-transmitted data is first compressed by using the software, to reduce a size of data that is actually transmitted subsequently. For example, a size of the to-be-transmitted data is 2 gigabytes (Gigabyte, GB), a size of the compressed to-be-transmitted data is 1 GB, and the compressed data with the size of 1 GB is transmitted to the computer apparatus B through the PCIe bus. After receiving the compressed data, the computer apparatus B restores the compressed data to the original to-be-transmitted data. If a data transmission rate of the PCIe bus between the computer apparatus A and the computer apparatus B is 50 megabytes (Megabyte, MB) per second, duration required for transmitting the compressed data with the size of 1 GB is 20 seconds. However, the 2 GB of data is actually transmitted from the computer apparatus A to the computer apparatus B within the 20 seconds. Therefore, it may be considered that bandwidth of 100 MB/s is actually implemented. In this way, the data transmission rate is actually increased when the PCIe version and the quantity of channels remain unchanged.

However, when the data processing system shown in FIG. 1 is used for data transmission, some problems may be caused. First, a bandwidth improvement capability brought by this solution is limited, and the bandwidth capability is limited by a compression ratio of a compression algorithm used by the software, an algorithm load degree, a computing capability of the receiving end, and a computing capability of the transmitting end. Second, because the transmitting end and the receiving end need to perform data compression and decompression operations respectively, extra processor resources of the transmitting end and the receiving end are occupied, and therefore extra overheads are caused to a computing capability and power consumption of the system. Third, development and use costs of compression software are introduced, and if third-party software or open-source software is selected, a quality risk may be further caused to the system, and software management becomes more complex.

In view of the foregoing problems, this application provides a bandwidth improvement method and apparatus, so that, when a version and a quantity of channels of a PCIe bus remain unchanged, a constraint of an upper limit of physical bandwidth on a system design can be overcome, and an actual data transmission rate can be increased by using a multi-channel hardware connection manner and collaborative support of software that implements a synchronous transmission function, to meet a bandwidth requirement of transmission of a large data stream without causing excessive overheads of computing resources and introducing excessive extra costs.

FIG. 2 is a diagram of an architecture of a data processing system according to this application. As shown in FIG. 2, the data processing system includes a host and several subsystem devices. The host may be a computer apparatus, for example, a server or a personal computer (personal computer, PC). The subsystem device is connected to the host through a PCIe bus, and the subsystem device and the host may transmit data to each other. The subsystem device may be an external device connected to the host, or may be an independent computer apparatus. When the subsystem device is an external device connected to the host, the subsystem device may be directly inserted into a slot on a mainboard of the host, or may be connected to the host through a cable. The subsystem device may be located inside the host, or may be located outside the host. A connection manner and a location relationship between the subsystem device and the host are not limited in this application.

As shown in FIG. 2, the host 200 includes components such as a processor 210, a root complex (Root Complex, RC) 220, a PCIe switch (switch) 230, and a memory (not shown in the figure). The processor 210 is configured to: interpret a computer instruction, and process data in computer software. The root complex 220 connects the processor 210 and the memory to a PCIe switching structure that includes one or more switching devices. Similar to a host bridge in a PCI system, the root complex 220 generates a transaction request on behalf of the processor 210. The root complex 220 may be used as a component independent of the processor 210, or may be integrated into the processor 210. FIG. 2 separately shows the root complex 220. The root complex 220 is used as a component independent of the processor 210. However, an actual form of the root complex 220 is not limited in this application.

From a perspective of system software, each PCIe link occupies one PCI bus number, and the PCIe bus uses an end-to-end connection manner. Theoretically, one PCIe link can be connected to only one device. For example, each PCIe link can be connected to only one PCIe device, PCIe switch, endpoint (endpoint, EP), or PCIe bridge chip. When a plurality of EPs need to be mounted to one PCIe link, the PCIe switch needs to be used for link expansion. A standard PCIe switch has one upstream port (upstream port) and a plurality of downstream ports (downstream ports). The upstream port may be connected to the root complex or a downstream port of another PCIe switch, and the downstream port may be connected to an EP, a PCIe bridge, or an upstream port of a downstream PCIe switch.

The PCIe switch performs link expansion through a plurality of specific ports. As shown in FIG. 2, four ports of the PCIe switch 230 are respectively connected to different PCIe controllers. The four PCIe controllers respectively belong to two different subsystem devices. In other words, each subsystem device may include a plurality of PCIe controllers, for example, one primary PCIe controller and one secondary PCIe controller. A quantity and a type of PCIe controllers included in each subsystem device are not limited in this application The PCIe controller is usually a high-speed bus transceiver that is integrated into a processor chip and that supports a PCIe protocol, and may be considered as an interface of a PCIe device. A quantity of PCIe controllers integrated into the processor chip may be set based on a specification of the chip. When the plurality of PCIe controllers are integrated into the processor chip, each PCIe controller may occupy one pin of the processor chip, and may establish a link that is used as a primary link or a candidate link to the host through the pin.

For the host (or the processor in the host), different PCIe controllers at a peer end are identified as independent devices that are connected through different links, and these PCIe controllers have independent bus numbers, device numbers, or function numbers (bus numbers/device numbers/function numbers, BDFs). Different space addresses are allocated to the different PCIe controllers by using the independent BDFs.

It should be noted that, although the PCIe controllers have the independent BDFs and are identified by the host as the devices independent of each other, in this application, the host can still identify a subsystem device to which these PCIe controllers belong. For example, the host may identify that both a PCIe controller 241 and a PCIe controller 242 belong to a subsystem device 240. Therefore, when data needs to be sent to the subsystem device 240, the data is sent through a first PCIe link (referred to as a first link below) that connects the host 200 to the PCIe controller 241 and a second PCIe link (referred to as a second link below) that connects the host 200 to the PCIe controller 242.

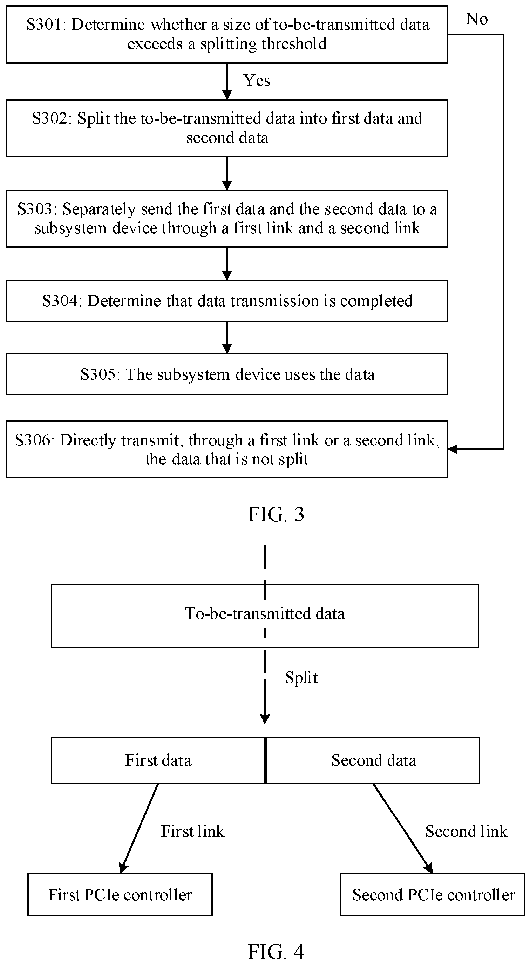

FIG. 3 is a schematic diagram of a procedure of a data processing embodiment according to this application.

The data processing procedure is performed based on the architecture shown in FIG. 2. When data is transmitted between the host and a subsystem device in FIG. 2, steps in the procedure shown in FIG. 3 are used. For ease of description, in this application, an example in which the host sends the data to the subsystem device is used for description. However, the subsystem device may alternatively send the data to the host by using the method procedure shown in FIG. 3. A data transmission direction is not limited in this application.

Generally, in the method procedure shown in FIG. 3, a plurality of controllers of each subsystem device are used. The to-be-transmitted data is split into a plurality of pieces and separately transmitted through a link between the host and each controller. In this way, a data transmission rate is increased when a version and a quantity of channels of the PCIe bus remain unchanged.

S301: Determine whether a size of the to-be-transmitted data exceeds a splitting threshold.

In this embodiment, the to-be-transmitted data may be split into the plurality of pieces and transmitted through different links. Before the data is split, whether the to-be-transmitted data exceeds the preset splitting threshold may be first determined. When the size of the to-be-transmitted data exceeds the splitting threshold, the to-be-transmitted data is split into a plurality of pieces based on a quantity of available links between the host and the subsystem device. For example, as shown in FIG. 2, when the first link connecting the host to the primary PCIe controller and the second link connecting the host to the secondary PCIe controller exist between the host and the subsystem device, the to-be-transmitted data may be split into two pieces and separately transmitted through the first link and the second link. When the size of the to-be-transmitted data does not exceed the splitting threshold, the to-be-transmitted data that is not split is directly transmitted through the first link or the second link.

A reason for setting the splitting threshold is that specific overheads may be generated when the host side performs a splitting operation on the data or when the subsystem device side confirms whether the separately transmitted data is completely transmitted. Therefore, for to-be-transmitted data with a smaller size, a benefit brought by using the data processing method provided in this embodiment may not compensate for generated overheads. Therefore, a conventional method may be selected, and all the to-be-transmitted data is transmitted through one link. For to-be-transmitted data with a larger size, a benefit brought by using the data processing method provided in this embodiment usually exceeds generated overheads. Therefore, the data is first split, and then split data is transmitted through different data links.

In a possible implementation of this application, the splitting threshold may be set based on an attribute of the first link and/or an attribute of the second link in a data transmission aspect. For example, when the host and the primary PCIe controller transmit data through the first link, the data may be encapsulated into a transaction layer packet (transaction layer packet, TLP) for transmission. A complete TLP includes elements such as a TLP header (header) and a data payload (data payload). In a PCIe bus, a maximum value of the data payload of the TLP is 4 kilobytes (Kilobyte, KB). However, the PCIe device may not be capable of sending a TLP with a size of 4 KB and a TLP that can be sent is affected by two parameters "Max_Payload_Size_Supported" and "Max_Payload_Size". The parameter "Max Payload _Size _Supported" is used to indicate a maximum value of an effective payload of a TLP in a PCIe device, and this parameter is determined by hardware logic of the PCIe device, and cannot be modified by system software. The parameter "Max_Payload_Size" is used to indicate a maximum value of a data payload of the TLP actually used by the PCIe device, and this parameter is determined through negotiation by devices at both ends of a PCIe link, and is a parameter actually used by the PCIe device during data transmission. However, in this embodiment, the splitting threshold may be set to a value of the parameter "Max_Payload_Size_Supported" or several times a value of the parameter "Max_Payload_Size", and is used as a boundary for determining whether to split the data.

However, in another possible implementation of this application, a user of the host may alternatively set a value of the splitting threshold. Overheads and a benefit that are generated by sending the split data are affected by many factors. If the splitting threshold is set only by using an attribute of a link, an optimal effect may not be achieved. Therefore, in actual use, the user may select an appropriate splitting threshold based on rates at which data with different sizes is transmitted in different manners.

In addition, the user or the host may alternatively choose not to perform the foregoing determining, directly split all the to-be-transmitted data, and separately transmit the to-be-transmitted data through different links. Whether an operation of determining whether the size of the to-be-transmitted data exceeds the splitting threshold is performed in advance is not limited in this application.

S302: Split the to-be-transmitted data into first data and second data.

FIG. 4 is a schematic diagram of a solution in which the to-be-transmitted data is split and separately transmitted.

As shown in FIG. 4, when it is determined that the size of the to-be-transmitted data exceeds the splitting threshold, it is determined to split the to-be-transmitted data, and the to-be-transmitted data is split, by using a specific method, into the first data transmitted through a first link and the second data transmitted through a second link.

There may be a plurality of data splitting methods. The following describes several data splitting methods by using examples. It should be noted that the manner of a data method is not limited in this application.

In a possible implementation of this application, the to-be-transmitted data may be evenly split. For example, if the size of the to-be-transmitted data is 1 MB, and links that can be used for data transmission are the first link and the second link, the to-be-transmitted data is split into two pieces of data each with a size of 0.5 MB, and the split data is separately transmitted through the first link and the second link.

Data splitting performed in a manner of evenly splitting the to-be-transmitted data is simple and easy to implement. In addition, attributes of a plurality of PCIe links between the host and the subsystem device are usually the same or similar. Therefore, a good effect can be generally achieved by using this method.

In another possible implementation of this application, a manner of splitting the to-be-transmitted data may be alternatively determined based on a link state of the first link and a link state of the second link. A link state refers to an attribute that is related to data transmission and that is of a link, for example, link bandwidth or link usage. For a transmission task, when to-be-sent data corresponding to the transmission task is transmitted through a plurality of links, the transmission task can be considered to be completed only when the data corresponding to all the links is completely transmitted, and a receiver can use the complete data only on this basis. Therefore, enabling different links to complete data transmission at the same time as much as possible helps improve data transmission efficiency. However, when the link state refers to link bandwidth, and bandwidth of the first link is different from bandwidth of the second link, to enable the first link and the second link to complete data transmission at the same time or within approximate duration, the data that needs to be transmitted may be proportionally allocated based on the bandwidth of the first link and the bandwidth of the second link. For example, if the size of the to-be-transmitted data is 3 MB, and the bandwidth of the first link is twice the bandwidth of the second link, data with a size of 2 MB in the to-be-transmitted data is allocated to the first link, and remaining data with a size of 1 MB is allocated to the second link. Similarly, when the link state refers to link usage, less data that needs to be transmitted is allocated to a link whose current link usage is higher, and more data that needs to be transmitted is allocated to a link whose current link usage is lower.

To separately determine the bandwidth of the first link and the bandwidth of the second link, or determine a ratio of the bandwidth of the first link to the bandwidth of the second link, the host may obtain attribute information of the two links, to obtain bandwidth data of the two links. For example, the host may obtain specifications of slots occupied by ports of the first link and the second link. For a same PCIe version, bandwidth of an X4 slot is twice bandwidth of an X2 slot. In this case, when the first link uses the X4 slot, and the second link uses the X2 slot, it may be considered that the bandwidth of the first link is twice the bandwidth of the second link.

In addition, the bandwidth of the first link and the bandwidth data of the second link may be alternatively obtained in a manner of sending a test packet. For example, the host first sends a small test packet through the first link, determines the bandwidth of the first link based on duration required for transmitting the packet through the first link and a size of the packet, then sends the test packet through the second link, and determines the bandwidth of the second link based on duration required for transmitting the packet through the second link and the size of the packet. Because bandwidth of a link usually does not change greatly, data obtained through testing may be used for a long period of time, without testing each time data is transmitted.

In another possible implementation of this application, the first data transmitted through the first link and the second data transmitted through the second link may be alternatively determined based on an address alignment attribute (address alignment attribute). When the host and the subsystem device transmit data, the to-be-transmitted data usually needs to be supplemented based on the address alignment attribute. The alignment attribute is related to a PAGE_SIZE (which is usually 4 K, and is up to 2 M) parameter of an operating system of the host. If a byte length of the to-be-transmitted data is not an integer multiple of PAGE_SIZE, the operating system cannot ensure that the data is allocated to consecutive physical addresses. When the data is transmitted based on the consecutive physical addresses, the data may be incorrectly transmitted. In this case, it may be first ensured that the first data meets a requirement of the address alignment attribute, and then a supplement operation is performed on the second data based on the address alignment attribute.

S303: Separately send the first data and the second data to the subsystem device through the first link and the second link.

As shown in FIG. 4, after the to-be-transmitted data is split, the first data and the second data are respectively sent to a first PCIe controller and a second PCIe controller in the subsystem device through the first link and the second link. To increase the data transmission rate, the data may be transmitted in a direct memory access (Direct Memory Access, DMA) manner.

The DMA is a fast data transmission technology, and allows hardware apparatuses at different speeds to communicate, without relying on a large quantity of interrupt loads of the processor. Otherwise, the processor needs to copy data of each fragment from a transmitting end to a register, and then write the data to a new location. During this time period, the processor cannot perform another operation. Data transmission by using the DMA is to directly copy data from one piece of address space to another piece of address space. When the processor initializes a data transmission action, the data transmission action is implemented and completed by a DMA controller. For example, when a block of a memory outside a chip is moved to a storage area inside the chip, the data transmission operation does not occupy a processing capability of the processor, and the processor may continue to process another service.

When DMA transmission is implemented, the DMA controller directly controls a bus. Therefore, there is an issue of transferring a bus control right. To be specific, before DMA transmission, the processor hands over the bus control right to the DMA controller, and after DMA transmission ends, the DMA controller hands over the bus control right to the processor. A complete DMA transmission process includes four steps: a DMA request, a DMA response, DMA transmission, and DMA ending.

In this application, address information separately corresponding to the first data and the second data is determined based on the data splitting method in S302 and a first address of the to-be-transmitted data. The address information of the first data or the second data may be represented by using an address interval including a first address and a last address, or may be represented by using a first address and length information of the data. This is not limited in this application.

The host submits different DMA descriptors (Descriptors) to transmit, through different DMA channels, the first data and the second data that are obtained through splitting. The DMA descriptor, usually also referred to as a DMA descriptor array, is a pointer array in a form of unsigned long* hw_desc[DESC_NUM]. Each pointer (hw_desc[i]) points to one descriptor. This descriptor is defined by hardware, and a data structure of this descriptor is generally defined by a datasheet or an SDK. The DMA descriptor may be classified into a hardware descriptor and a software descriptor. The hardware descriptor usually includes a control bit, a data buffer address, a packet length, a wrap bit, and a next pointer. The software descriptor usually includes information of a horizontal intra-packet fragment and a vertical multi-packet chain that are required for maintaining complete data link information, to perform link tracking.

The processor in the host can only directly access memory space of the host, and cannot directly operate the subsystem device. Therefore, storage space that is opened to the host and that is in the subsystem device needs to be mapped to the memory space, and when needing to access the storage space of the subsystem device, the processor only needs to access corresponding memory space. As a PCIe device, the subsystem device may have several pieces of storage space that need to be mapped to the memory space. Before delivery of the subsystem device, sizes and attributes of these pieces of storage space are written to a base address register (base address register, BAR). System software in the host separately allocates corresponding system memory space to the storage space in the subsystem device by reading information in the BAR, and writes a base address of the allocated system memory space to the BAR. In other words, an address of the BAR is an address of a PCIe bus domain, and the processor accesses an address of a memory domain. When accessing the PCIe device, the processor needs to convert the address of the bus domain into the address of the memory domain.

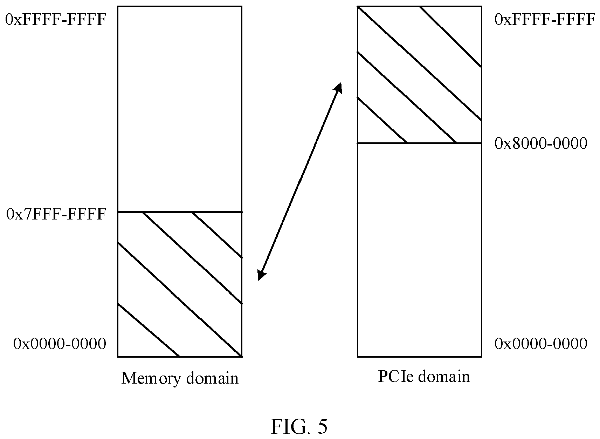

FIG. 5 is a schematic diagram of a mapping relationship between a memory domain and a PCIe bus domain.

When a PCIe device accesses address space of the memory domain by using a DMA mechanism, a processor system also needs to reversely map the address space of the memory domain to PCIe bus address space. It is assumed that, in a processor system, a size of a primary memory is 2 GB, and address space of the primary memory in the memory domain is 0x0000-0000 to 0x7FFF-FFFF. "PCIe bus address space" corresponding to the address in the PCIe bus domain is 0x8000-0000 to 0xFFFF-FFFF. Therefore, when the PCIe device performs a DMA operation, an address of a PCIe bus domain 0x8000-0000 to 0xFFFF-FFFF needs to be used. In this way, a host main bridge can claim the PCIe bus transaction, convert a PCIe bus address used by the bus transaction into a memory address, and perform data transfer with a memory area 0x0000-0000 to 0x7FFF-FFFF.

It should be noted that the foregoing mapping manner between the memory domain and the PCIe bus domain is merely an example for ease of describing this embodiment of this application, and does not limit the protection scope of this application.

In this solution, when the host performs data transmission, both the first link and the second link are in an active state. That a link is in the active (active) state means that not only the link is formed between the host and an interface of the subsystem device by using a physical connection, but the link has completed preparation for data transmission, and is in a state of transmitting data or being capable of transmitting data at any time.

Further, to increase the data transmission rate, in a possible implementation, the first data may be transmitted through the first link and the second data may be transmitted through the second link in parallel. In this method, data transmission is performed through a plurality of links at a same time. This increases bandwidth between the host and the subsystem device.

S304: Determine that data transmission is completed.

When the host separately sends, to the subsystem device through the first link and the second link, the first data and the second data that are obtained by splitting the to-be-transmitted data, the subsystem device may not know the size of the to-be-transmitted data, and may not know a size of the first data and a size of the second data. Therefore, after determining that both data transmission of the first link and data transmission of the second link are completed, the host needs to send a synchronization signal to the subsystem device. The synchronization signal is used to notify the subsystem device that transmission of the to-be-transmitted data is completed. After receiving the synchronization signal, the subsystem device determines that data transmission is completed.

In another possible implementation of this application, alternatively, the host may send a first synchronization signal to the subsystem device after transmission of the first data transmitted through the first link is completed, and the host may send a second synchronization signal to the subsystem device after transmission of the second data transmitted through the second link is completed.

A form of the synchronization signal and a method for sending the synchronization signal by the host to the subsystem device are not limited in this application either. In a possible implementation of this application, the host and the subsystem device are further connected through a signal link independent of a data link. The signal link is used to transmit data that has a high requirement for timeliness. The host may send the synchronization signal through the signal link.

In addition, each time data is sent to the subsystem device, specific storage space needs to be occupied. Storage space of a PCIe domain has a destination buffer pointer, which is used to indicate a first address of data written next time. Therefore, after it is determined that data transmission is completed, the destination buffer pointer of the storage space of the PCIe domain needs to be updated, an updated pointer points to a last address that is of the data written this time and that in the storage space, and the last address is used as the first address of the data written next time.

S305: The subsystem device uses the data.

When the subsystem device receives the to-be-transmitted data, the data is written to a shared data buffer in an operating subsystem. The shared data buffer is a data storage area that is for writing by a producer and reading by a consumer. The producer refers to a data provider, for example, a process that is responsible for receiving the to-be-transmitted data in the subsystem device. The producer generates data, and after the consumer reads the data, writes data to the shared data buffer. The consumer refers to a data user, for example, a process that uses the to-be-transmitted data in the subsystem device. The consumer obtains the data after the producer writes the data to the shared data buffer.

A producer/consumer model uses a flag bit and a status bit to complete data exchange. The flag bit is used by the producer to notify the consumer whether the data is written, and the status bit is used by the consumer to notify the producer whether data is read. As shown in Table 1, specifically, after the producer has written the data to the shared data buffer, the flag bit is set to 1. The consumer confirms that the producer has written the data to the shared data buffer by identifying that the flag bit is 1, and sets the flag bit to 0 after reading the data. Correspondingly, after having read the data from the shared data buffer, the consumer sets the status bit to 1. The producer confirms that the producer has read the data from the shared data buffer by identifying that the status bit is set to 1. When subsequently writing the data to the data buffer, the producer sets the status bit to 0.

**Table 1 Flag bit and status bit**

| Flag | Status | Description |
|---|---|---|
| 0 | 0 | Idle state in which the shared data buffer is empty |
| 1 | 0 | The producer writes the data, but the consumer does not use the data. |
| 0 | 1 | The consumer has used the data. |
| 1 | 1 | Error state |

The foregoing producer/consumer model is a method for using the data from the host by the process in the subsystem device. A manner in which the subsystem device uses the to-be-transmitted data is not limited in this application.

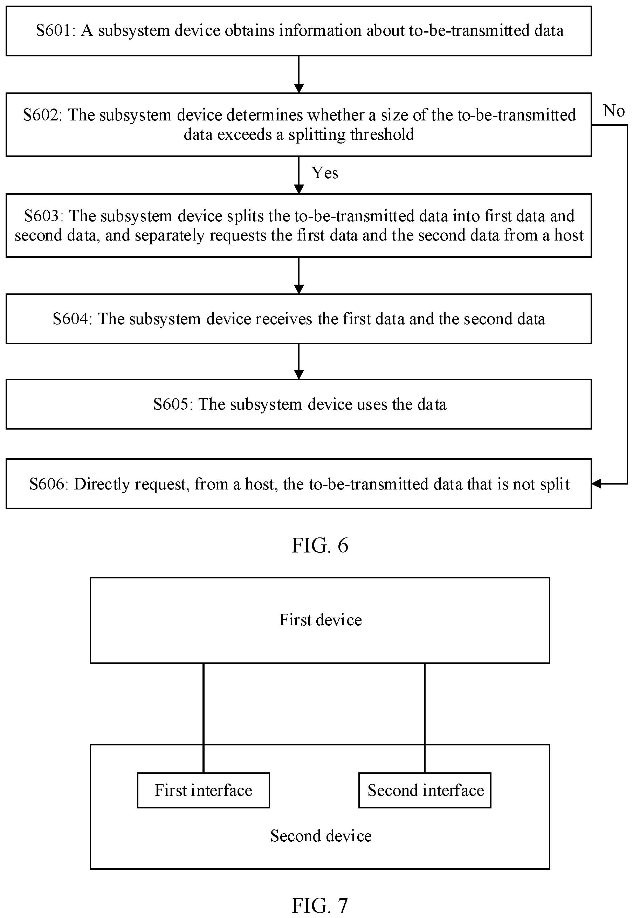

FIG. 6 is a schematic diagram of a procedure of another data processing embodiment according to this application.

In the data processing method shown in FIG. 3, the host actively sends the to-be-transmitted data to the subsystem device. Actually, the subsystem device may alternatively request data from the host, and then the host sends the to-be-transmitted data to the subsystem device based on a data request of the subsystem device. As shown in FIG. 6, when a subsystem device sends data to a host, a data processing procedure includes the following steps.

S601: The subsystem device obtains information about the to-be-transmitted data.

In this embodiment, the subsystem device requests the to-be-transmitted data from the host, and the requested to-be-transmitted data is stored in the host. Therefore, the subsystem device needs to first obtain the information about the to-be-transmitted data.

In a possible implementation, the host has determined, based on a service between the host and the subsystem device, the to-be-transmitted data that needs to be subsequently sent to the subsystem device. In this case, the host may send the information about the to-be-transmitted data to the subsystem device, so that the subsystem device obtains the information about the to-be-transmitted data.

In another possible implementation, the subsystem device may obtain information about some or all data in the host, for example, information about data that is related to the subsystem device and that is in the host. In this case, the subsystem device determines the information about the to-be-transmitted data from the known information about the data in the host based on a requirement of a subsequent service.

S602: The subsystem device determines whether a size of the to-be-transmitted data exceeds a splitting threshold.

Refer to step S301. After determining the information about the to-be-transmitted data, the subsystem device may first determine whether the size of the to-be-transmitted data exceeds the splitting threshold. When the to-be-transmitted data is greater than the splitting threshold, step S603 is performed, that is, the to-be-transmitted data is split into a plurality of pieces based on data of available links between the subsystem device and the host, and split data is separately requested. When the size of the to-be-transmitted data does not exceed the splitting threshold, step S606 is performed, that is, the to-be-transmitted data that is not split is directly requested from the host.

S603: The subsystem device splits the to-be-transmitted data into first data and second data, and sends, to the host, a first request for requesting the first data and a second request for requesting the second data.

Refer to step S302. When determining that the size of the to-be-transmitted data exceeds the splitting threshold, the subsystem device determines to split the to-be-transmitted data, and splits the to-be-transmitted data, by using a specific method, into the first data transmitted through a first link and the second data transmitted through a second link. The data splitting method is described in step S302 by using examples. Details are not described herein again.

It should be noted that, in step S302, the host that performs an operation of splitting the to-be-transmitted data has the to-be-transmitted data, but in step S603, the subsystem device that performs an operation of splitting the to-be-transmitted data actually has only the information about the to-be-transmitted data. Therefore, the operation of splitting the to-be-transmitted data in step S603 includes: The subsystem device sends information about the first data and information about the second data to the host, to indicate the host to specifically perform the operation of splitting the to-be-transmitted data into the first data and the second data. The information about the first data and the information about the second data each may include a size of the data, a storage address in the host, a name of a corresponding file, and the like. This is not limited in this application. For example, when the size of the to-be-transmitted data is 10 MB, the subsystem operation indicates the host to split the to-be-transmitted data into the first data with a size of 6 MB and the second data with a size of 4 MB.

S604: The subsystem device receives the first data and the second data.

After receiving the first request and the second request that are sent by the subsystem device, the host separately sends the first data and the second data to the subsystem device through the first link and the second link. Refer to step S303. The host may separately send the first data and the second data to the subsystem device in a manner of DMA, and may send the first data and the second data at the same time.

Both the first data and the second data are requested by the subsystem device from the host. In this case, the subsystem device has obtained the information about the first data and the information about the second data, for example, the size of the first data and the size of the second data. Therefore, the subsystem device may determine whether transmission of the to-be-transmitted data is completed, or may separately determine whether transmission of the first data transmitted through the first link or the second data transmitted through the second link is completed, and the host does not need to send a synchronization signal.

S605: The subsystem device uses the data.

For a method for using the data by the subsystem device, refer to step S305. Details are not described herein again.

FIG. 7 is a schematic diagram of an architecture of another data processing system according to this application.

As shown in FIG. 7, the data processing system includes a first device and a second device. The first device and the second device each are an electronic device that can perform data processing, for example, a host, a mobile phone (mobile phone), a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). In a possible implementation, the first device and the second device each are a host. In another possible implementation, the first device is a host, and the second device is an external device. The second device includes at least two interfaces. The first interface and the second interface are separately connected to the first device through a first link and a second link. The at least two interfaces of the second device each are a component that may process data, for example, a PCIe controller or a network interface card. The links between the interfaces and the first device are used to transmit the data. For the first device, although the interfaces of the second device are identified as devices independent of each other, the first device may identify that these interfaces all belong to the second device. Therefore, when needing to send data to the second device, the first device may send the data through the first link connected to the first interface and/or the second link connected to the second interface.

In a possible implementation of this application, the link between the interface of the second device and the first device is a wired link, that is, the interface is connected to the first device through a cable that has a physical form, for example, a bus or a network cable, or a slot.

In a possible implementation of this application, the data is sent between the interface of the second device and the first device by using a preset protocol, for example, a PCIe protocol, a compute express link (compute express link, CXL) protocol, or a universal serial bus (Universal Serial Bus, USB) protocol. A type of the protocol used for data transmission between the interface and the first device is not limited in this application.

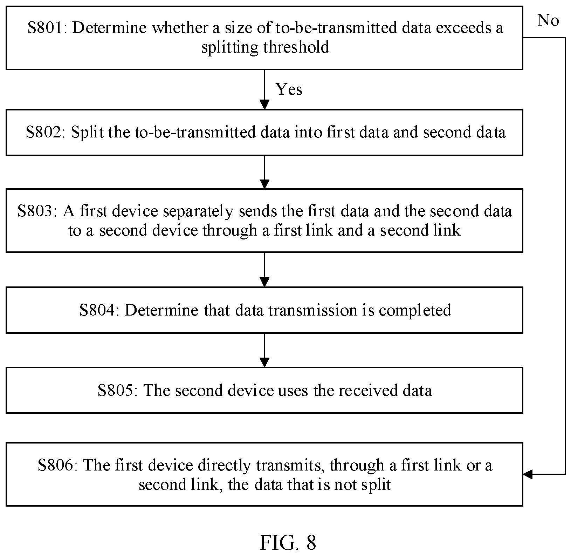

FIG. 8 is a schematic diagram of a procedure of another data processing embodiment according to this application.

The data processing procedure is performed based on the architecture shown in FIG. 7. When data is transmitted between the first device and the second device in FIG. 7, steps in the procedure shown in FIG. 7 are used. For ease of description, an example in which the first device sends the data to the second device is used for description in this application. However, the second device may also send the data to the first device by using the method procedure shown in FIG. 8. A data transmission direction is not limited in this application.

In addition, the procedure shown in FIG. 8 includes a case in which the first device actively sends the to-be-transmitted data to the second device, and also includes a case in which the second device requests the data from the first device, and then the first device sends the to-be-transmitted data to the second device based on a data request of the second device.

S801: Determine whether a size of the to-be-transmitted data exceeds a splitting threshold.

Refer to steps S301 and S602. When needing to transmit the data to the first device, the first device may first determine whether the size of the to-be-transmitted data exceeds the splitting threshold. When the to-be-transmitted data exceeds the splitting threshold, step S802 is performed, that is, the to-be-transmitted data is split into first data and second data. When the size of the to-be-transmitted data does not exceed the splitting threshold, step S806 is performed, that is, the to-be-transmitted data that is not split is directly transmitted through the first link or the second link.

Step 5801 may be performed by the first device, or may be performed by the second device. Usually, when the first device actively sends the to-be-transmitted data to the second device, the first device performs the foregoing determining operation, and when the first device sends the to-be-transmitted data to the second device based on the data request of the second device, the second device performs the foregoing determining operation.

S802: Split the to-be-transmitted data into the first data and the second data.

Refer to steps S302 and S603. When it is determined that the size of the to-be-transmitted data exceeds the splitting threshold, it is determined to split the to-be-transmitted data, and the to-be-transmitted data is split, by using a specific method, into the first data transmitted through the first link and the second data transmitted through the second link. The data splitting method is described in step S302 by using examples. Details are not described herein again.

Step 5802 may be that the first device splits the to-be-transmitted data into the first data and the second data, or may be that, after obtaining information about the to-be-transmitted data, the second device separately requests the first data and the second data from the first device through the first interface and the second interface, so that the first device splits the to-be-transmitted data before data transmission.

S803: The first device separately sends the first data and the second data to the second device through the first link and the second link.

Refer to steps S303 and S604. After the to-be-transmitted data is split, the first device separately sends the first data and the second data to the second device through the first link and the second link. The first device may separately send the first data and the second data to the second device in a manner of DMA, and may send the first data and the second data at the same time.

S804: Determine that data transmission is completed.

Refer to steps S304 and S604. When the first device actively sends the to-be-transmitted data to the second device, because the second device does not obtain information such as the size of the to-be-transmitted data, the second device cannot determine whether data transmission is completed, and usually needs to determine, by receiving a synchronization signal sent by the first device, that data transmission is completed. When the first device sends the to-be-transmitted data to the second device based on the data request of the second device, the second device has obtained information about the to-be-transmitted data, the first data, and the second data, and may determine whether transmission of the to-be-transmitted data is completed, and the first device does not need to send a synchronization signal.

S805: The second device uses the received data.

Refer to steps S305 and S605. When the second device receives the to-be-transmitted data, a corresponding process in the second device reads and uses the data.

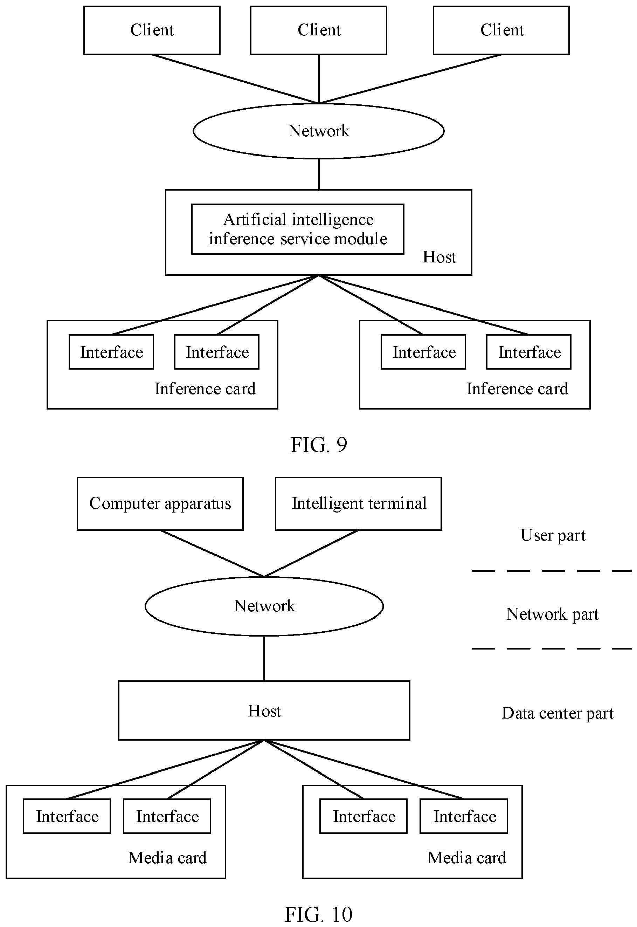

FIG. 9 is a schematic diagram of an artificial intelligence (Artificial Intelligence, AI) application scenario according to this application.

As shown in FIG. 9, an inference node includes a host and several inference cards. The inference card is configured to provide an artificial intelligence inference capability, and usually includes a processing unit, for example, a graphics processing unit (Graphics Processing Unit, GPU), a network processing unit (Network Processing Unit, NPU), or a central processing unit (Central Processing Unit, CPU) that has a specific computing capability. The inference card may support an artificial intelligence function, for example, real-time high-definition video analysis or image recognition, and therefore is widely applied to a scenario, for example, a smart city, smart transportation, or smart finance. Correspondingly, the host includes an artificial intelligence inference service (Artificial Intelligence Inference Service) module, configured to schedule and manage an AI inference task. Specifically, the AI inference service module may receive the AI inference task from a client through a network, allocate the received AI inference task to one or more inference cards by using a specific scheduling method, and after the inference card completes the AI inference task, receive a result obtained by the inference card. In another possible implementation, the host may further indicate the inference card to process an AI training task. To be specific, the host provides a model and training data for the inference card, and the inference card processes the training data by using the model, and compares a processing result with a real result, to implement a function, for example, model optimization.

In a process in which the inference node processes the AI inference task or AI training task, a large amount of data is transferred between the AI inference service module in the host and the inference card, for example, feature data related to the AI inference task or the model and the training data that are related to the AI training task. To improve working efficiency of the inference node, as shown in FIG. 9, the host may be separately connected to a plurality of interfaces on the inference card through a plurality of links. For ease of description, in FIG. 9, the host is connected to two interfaces of each inference card through different links. However, a quantity of interfaces of each inference card and a quantity of interfaces between the inference card and the host are not limited in this application.

When the host sends the data to the inference card, refer to the method procedures shown in FIG. 3, FIG. 6, and FIG. 8. To be specific, the to-be-sent data is split into a plurality of parts, and the parts of data are transmitted at the same time through the different links, so that bandwidth for data transmission between the host and the inference card is increased when a bus version and a quantity of channels remain unchanged.

FIG. 10 is a schematic diagram of a cloud phone application scenario according to this application.

As shown in FIG. 10, a cloud phone system includes a user part, a network part, and a data center part. A computer apparatus or an intelligent terminal device of a user is connected to a host of the data center part through a network. The computer apparatus may be a device, for example, a server, a personal computer (personal computer, PC), a laptop (laptop), or a tablet computer. The intelligent terminal device may be a device, for example, a mobile phone (mobile phone), a head-mounted smart device, or a smartwatch. Types of the computer apparatus and the intelligent terminal device are not limited in this application.

In the data center part, the host receives a service request of the user, and transfers a task corresponding to the service request to a media card that is connected to the host for processing. After processing the task, the media card feeds back a processing result of the task to a server, and then the server sends the result to the computer apparatus or the intelligent terminal device of the user. The media card may usually include a processing unit, for example, a graphics processing unit, a network processing unit, or a central processing unit that has a specific computing capability.

In the cloud phone system, one host usually needs to support 100-odd cloud phones to run an application at the same time. For example, when 30 cloud phones run a large game at the same time, a large amount of image rendering data and data that needs to be calculated are usually generated, and all or some of the data needs to be exchanged between the server and the media card. In addition, in the cloud phone application scenario, user experience has a high requirement on real-time processing of a task by the cloud phone system, and data transmission and processing need to be completed as quickly as possible.

Therefore, in the data center part, as shown in FIG. 10, the host is separately connected to a plurality of interfaces on the media card through a plurality of links. For a method for transmitting the data between the server and the media card, refer to the method procedures shown in FIG. 3, FIG. 6, and FIG. 8. Specifically, the server is separately connected to the plurality of interfaces on the media card through the plurality of links. When needing to send the data to the media card, the server may split the to-be-sent data into a plurality of pieces, and transmit the plurality of pieces at the same time through different links, so that bandwidth for data transmission between the server and the media card is increased when a bus version and a quantity of channels remain unchanged.

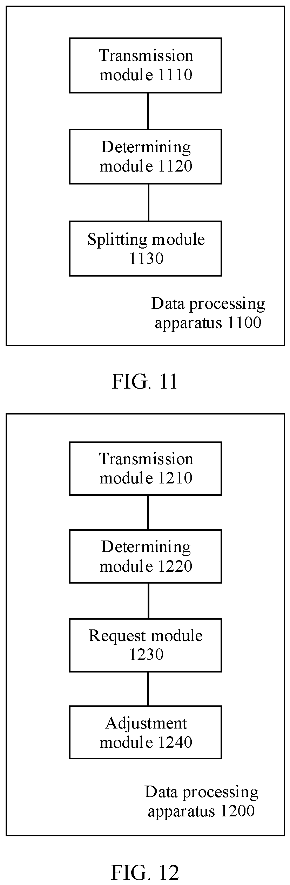

FIG. 11 is a schematic diagram of a data processing apparatus according to this application. The data processing apparatus may be the host in FIG. 2, FIG. 9, or FIG. 10, or the first device in FIG. 7, or may be a part of the host or the first device. The data processing apparatus is separately connected to a first interface and a second interface in a PCIe device through a first PCIe link and a second PCIe link.

As shown in FIG. 11, the data processing apparatus 1100 includes a transmission module 1110, a determining module 1120, and a splitting module 1130. A function of each module is as follows:

The transmission module 1110 is configured to: send first data to the PCIe device through the first PCIe link, and send second data to the PCIe device through the second PCIe link when sending the first data.

The determining module 1120 is configured to determine to-be-transmitted data that needs to be sent to the PCIe device.

The splitting module 1130 is configured to split the to-be-transmitted data into the first data and the second data.

The transmission module 1110, the determining module 1120, and the splitting module 1130 may be further configured to perform the procedures shown in FIG. 3 and FIG. 8. Specifically, the transmission module 1110 may perform steps S303 and 5306 in FIG. 3 and steps S803 and S806 in FIG. 8. The determining module 1120 may perform steps S301 and 5304 in FIG. 3 and steps S801 and S804 in FIG. 8. The splitting module 1130 may perform step S302 in FIG. 3 and step 5802 in FIG. 8. Details are not described herein again in this application.

FIG. 12 is a schematic diagram of a data processing apparatus according to this application. The data processing apparatus may be the subsystem device in FIG. 2, the first device in FIG. 7, the acceleration card in FIG. 9, or the media card in FIG. 10, or may be a part of the foregoing device. The data processing apparatus includes two interfaces, which are separately connected to a host through a first PCIe link and a second PCIe link.

As shown in FIG. 12, the data processing apparatus 1200 includes a transmission module 1210, a determining module 1220, a request module 1230, and an adjustment module 1240. A function of each module is as follows:

The transmission module 1210 is configured to: receive, through the first PCIe link, first data sent by the host, and receive, through the second PCIe link when receiving the first data, second data sent by the host.

The determining module 1220 is configured to determine to-be-transmitted data that needs to be requested from the host.

The request module 1230 is configured to separately request the first data and the second data from the host based on the to-be-transmitted data.

The adjustment module 1240 is configured to: after it is determined that the first data is written, adjust a pointer to an end of storage space. The storage space is space that is in the data processing apparatus 1200 and that stores the first data.

The transmission module 1210, the determining module 1220, the request module 1230, and the adjustment module 1240 may be configured to perform the procedures shown in FIG. 6 and FIG. 8. Specifically, the transmission module 1210 may perform step S604 in FIG. 6 and steps S803 and S806 in FIG. 8. The determining module 1220 may perform steps S601 and S602 in FIG. 6 and steps S801 and S804 in FIG. 8. The request module 1230 may perform step S603 in FIG. 6. Details are not described herein again in this application.

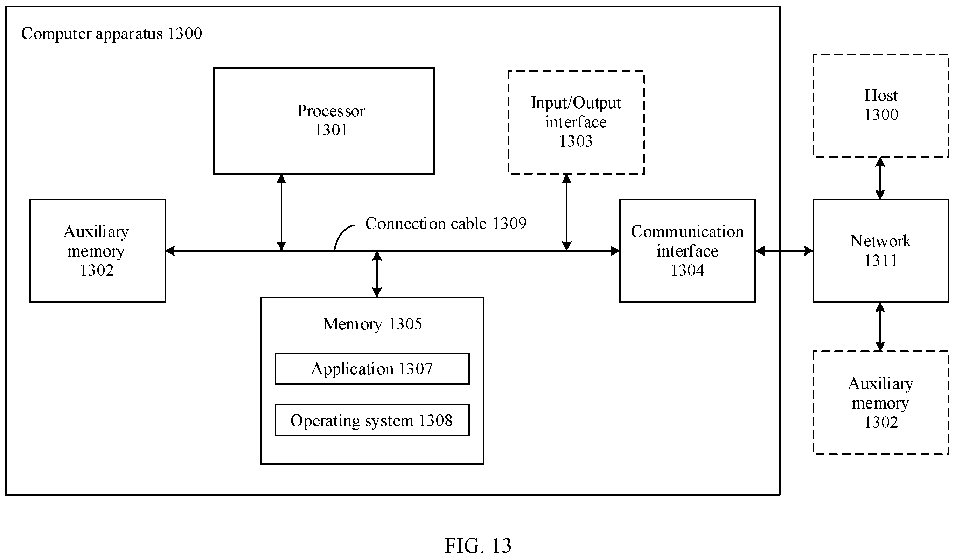

FIG. 13 is a schematic diagram of a structure of a computer apparatus 1300 according to an embodiment of this application. The computer apparatus 1100 in this embodiment may be a specific implementation of the computer apparatus in the foregoing embodiments, and may be the host in FIG. 2, FIG. 9, or FIG. 10, or the first device in FIG. 7, or may be a PCIe device, for example, the subsystem device 240 in FIG. 2, the second device in FIG. 7, the inference card in FIG. 9, or the media card in FIG. 10.

As shown in FIG. 13, the computer apparatus 1300 includes a processor 1301, and the processor 1301 is connected to a memory 1305. The processor 1301 may be computational logic, for example, a field programmable gate array (English full name: Field Programmable Gate Array, FPGA for short) or a digital signal processor (English full name: Digital Signal Processor, DSP for short), or a combination of any above computational logic. The processor 1101 may be alternatively a single-core processor or a multi-core processor.

The memory 1305 may be a RAM memory, a flash memory, a ROM memory, an EPROM memory, an EEPROM memory, a register, or a storage medium in any other form known in the art. The memory may be configured to store program instructions. When the program instructions are executed by the processor 1301, the processor 1301 performs the method in the foregoing embodiment.

A connection cable 1309 is configured to transfer information between components of the communication apparatus. The connection cable 1309 may use a wired connection manner or a wireless connection manner. This is not limited in this application. The connection cable 1309 is further connected to a network interface 1304.

The network interface 1304 implements communication with another device or a network 1311 by using, for example but not limited to, a connection apparatus, for example, a cable or an electric strand. The network interface 1304 may be further wirelessly interconnected to the network 1311.

Some features of this embodiment of this application may be completed/supported by the processor 1301 by executing the program instructions or software code in the memory 1305. Software components loaded on the memory 1305 may be summarized in terms of functions or logic, for example, the transmission module 1110, the determining module 1120, and the splitting module 1130 that are shown in FIG. 11, or the transmission module 1210, the determining module 1220, the request module 1230, and the adjustment module 1240 that are shown in FIG. 12.

In an embodiment of this application, after the memory 1305 loads the program instructions, the processor 1301 executes a transaction related to the foregoing function/logical module in the memory 1305.

In addition, FIG. 13 shows merely an example of the computer apparatus 1300. The computer apparatus 1300 may include more or fewer components than those shown in FIG. 13, or may have a different component configuration manner. In addition, each component shown in FIG. 13 may be implemented by hardware, software, or a combination of hardware and software. For example, the memory and the processor may be implemented in one module. Instructions in the memory may be written into the memory in advance, or may be loaded in a subsequent execution process of the processor. This is not limited in this application.

## Claims

1. A data processing system, wherein the data processing system comprises a host and a peripheral component interconnect express PCIe device, the PCIe device establishes a first PCIe link to the host through a first interface, and the PCIe device establishes a second PCIe link to the host through a second interface;
the host is configured to: send first data to the PCIe device through the first PCIe link, and send second data to the PCIe device through the second PCIe link;
the PCIe device is configured to: receive the first data through the first PCIe link, and receive the second data through the second PCIe link; and
both the first PCIe link and the second PCIe link are in an active state during data transmission.

2. The data processing system according to claim 1, wherein
the host is further configured to: determine to-be-transmitted data that needs to be sent to the PCIe device; and split the to-be-transmitted data into the first data and the second data.

3. The data processing system according to claim 1, wherein
the PCIe device is further configured to: determine to-be-transmitted data that needs to be requested from the host; and
separately request the first data and the second data from the host based on the to-be-transmitted data.

4. The data processing system according to claim 2, wherein
the host splits the to-be-transmitted data into the first data and the second data based on a link state of the first PCIe link and a link state of the second PCIe link.

5. The data processing system according to claim 2 or 3, wherein
the first data and the second data has a same size.

6. The data processing system according to any one of claims 1 to 5, wherein
the host is configured to: send the first data to the PCIe device through the first PCIe link by using direct memory access DMA, and send the second data to the PCIe device through the second PCIe link by using the DMA.

7. The data processing system according to any one of claims 2 and 4 to 6, wherein
the host is further configured to: before splitting the to-be-transmitted data into the first data and the second data, determine that a size of the to-be-transmitted data exceeds a preset value.

8. The data processing system according to any one of claims 1 to 7, wherein the host is further configured to:
determine that the first data and the second data are sent to the PCIe device; and
send a synchronization signal to the PCIe device.

9. The data processing system according to any one of claims 1 to 8, wherein
the PCIe device is further configured to: after determining that the first data is written, adjust a pointer to an end of storage space, wherein the storage space is space that is in the PCIe device and that stores the first data.

10. The data processing system according to any one of claims 1 to 9, wherein the data processing system is applied to a cloud phone scenario; and
the host is further configured to: before sending the first data to the PCIe device through the first PCIe link, receive a data processing task sent by a user, wherein data corresponding to the data processing task comprises the first data and the second data.

11. The data processing system according to any one of claims 1 to 9, wherein the data processing system is applied to an artificial intelligence AI scenario; and
the host is further configured to: before sending the first data to the PCIe device through the first PCIe link, receive an AI task, wherein data corresponding to the AI task comprises the first data and the second data.

12. A data processing method, wherein the data processing method is applied to a host, a peripheral device interconnect express PCIe device establishes a first PCIe link to the host through a first interface, the PCIe device establishes a second PCIe link to the host through a second interface, and the data processing method comprises:
sending first data to the PCIe device through the first PCIe link; and
sending second data to the PCIe device through the second PCIe link, wherein both the first PCIe link and the second PCIe link are in an active state during data transmission.

13. The data processing method according to claim 12, wherein the method further comprises:
determining to-be-transmitted data that needs to be sent to the PCIe device; and
splitting the to-be-transmitted data into the first data and the second data.

14. The data processing method according to claim 13, wherein
the splitting the to-be-transmitted data into the first data and the second data comprises:
splitting the to-be-transmitted data into the first data and the second data based on a link state of the first PCIe link and a link state of the second PCIe link.

15. The data processing method according to any one of claims 12 to 14, wherein before the splitting the to-be-transmitted data into the first data and the second data, the method further comprises:
determining that a size of the to-be-transmitted data exceeds a preset value.

16. The data processing method according to any one of claims 12 to 15, wherein the data processing method is applied to a cloud phone scenario, and before the sending first data to the PCIe device through the first PCIe link, the method further comprises:
receiving a data processing task sent by a user, wherein data corresponding to the data processing task comprises the first data and the second data.

17. A data processing apparatus, wherein a peripheral device interconnect express PCIe device establishes a first PCIe link to the data processing apparatus through a first interface, the PCIe device establishes a second PCIe link to the data processing apparatus through a second interface, and the data processing apparatus comprises:
a transmission module, configured to: send first data to the PCIe device through the first PCIe link; and
send second data to the PCIe device through the second PCIe link, wherein both the first PCIe link and the second PCIe link are in an active state during data transmission.

18. The data processing apparatus according to claim 17, wherein the data transmission apparatus further comprises:
a determining module, configured to determine to-be-transmitted data that needs to be sent to the PCIe device; and
a splitting module, configured to split the to-be-transmitted data into the first data and the second data.

19. The data processing apparatus according to claim 18, wherein
the splitting module is configured to split the to-be-transmitted data into the first data and the second data based on a link state of the first PCIe link and a link state of the second PCIe link.

20. The data processing apparatus according to any one of claims 17 to 19, wherein
the determining module is further configured to determine that a size of the to-be-transmitted data exceeds a preset value.

21. The data processing apparatus according to any one of claims 17 to 20, wherein the data processing apparatus is applied to a cloud phone scenario; and
the transmission module is further configured to receive a data processing task sent by a user, wherein data corresponding to the data processing task comprises the first data and the second data.

22. A computer apparatus, wherein the computer apparatus comprises a processor and a memory, the memory is configured to store program code, and the processor is configured to execute the program code to implement the data processing method according to any one of claims 12 to 16.

23. A data processing method, wherein the data processing method is applied to a peripheral device interconnect express PCIe device, the PCIe device establishes a first PCIe link to a host through a first interface, the PCIe device establishes a second PCIe link to the host through a second interface, and the data processing method comprises:
receiving, through the first PCIe link, first data sent by the host; and
receiving, through the second PCIe link, second data sent by the host, wherein both the first PCIe link and the second PCIe link are in an active state during data transmission.

24. The data processing method according to claim 23, wherein the method further comprises:
determining to-be-transmitted data that needs to be requested from the host; and
separately requesting the first data and the second data from the host based on the to-be-transmitted data.

25. The data processing method according to claim 24, wherein the separately requesting the first data and the second data from the host based on the to-be-transmitted data comprises:
separately requesting the first data and the second data from the host based on the to-be-transmitted data, a link state of the first PCIe link, and a link state of the second PCIe link.

26. The data processing method according to any one of claims 23 to 25, wherein the method further comprises:
before the separately requesting the first data and the second data from the host based on the to-be-transmitted data,
determining that a size of the to-be-transmitted data exceeds a preset value.

27. The data processing method according to any one of claims 23 to 26, wherein the method further comprises:
after it is determined that the first data is written, adjusting a pointer to an end of storage space, wherein the storage space is space that is in the PCIe device and that stores the first data.

28. The data processing method according to any one of claims 23 to 27, wherein the data processing method is applied to a cloud phone scenario, and the first data and the second data correspond to a data processing task sent by a user to the host.

29. A data processing apparatus, wherein the data processing apparatus establishes a first peripheral device interconnect express PCIe link to a host through a first interface, the data processing apparatus establishes a second PCIe link to the host through a second interface, and the data processing apparatus comprises:
a transmission module, configured to: receive, through the first PCIe link, first data sent by the host; and
receive, through the second PCIe link, second data sent by the host, wherein both the first PCIe link and the second PCIe link are in an active state during data transmission.

30. The data processing apparatus according to claim 29, wherein the data processing apparatus further comprises:
a determining module, configured to determine to-be-transmitted data that needs to be requested from the host; and
a request module, configured to separately request the first data and the second data from the host based on the to-be-transmitted data.

31. The data processing apparatus according to claim 30, wherein the request module is configured to:
separately request the first data and the second data from the host based on the to-be-transmitted data, a link state of the first PCIe link, and a link state of the second PCIe link.

32. The data processing apparatus according to any one of claims 29 to 31, wherein the data processing apparatus further comprises:
an adjustment module, configured to: after it is determined that the first data is written, adjust a pointer to an end of storage space, wherein the storage space is space that is in the PCIe device and that stores the first data.

33. The data processing apparatus according to any one of claims 29 to 32, wherein the data processing apparatus is applied to a cloud phone scenario, and the first data and the second data correspond to a data processing task sent by a user to the host.

34. A computer apparatus, wherein the computer apparatus comprises a processor and a memory, the memory is configured to store program code, and the processor is configured to execute the program code to implement the data processing method according to any one of claims 23 to 28.
